# EUROPEAN PATENT APPLICATION

(11) **EP 1 619 915 A1**
(43) Date of publication of application: **25.01.2006**
(21) Application number: 04102926.5
(22) Date of filing: 24.06.2004
(51) Int. Cl.: H04Q 7/38

(54) **Method for associating an application with a subscriber identity module**

(71) Applicant: Sony Ericsson Mobile Communications AB, 221 88 Lund (SE)
(72) Inventor: Andersson, Stefan, 230 41 Klagerup (SE); Liwell, Marcus, 211 30 Malmo (SE)
(74) Representative: Akerman, Marten Lennart

(57) **Abstract**

The invention relates to a method for associating an application with a subscriber identity module (8) in an apparatus, especially a mobile phone terminal adapted to run applications (5) within the framework of a virtual machine (4). The invention also relates to an apparatus implementing the method. The invention solves the problem of enabling or disabling of applications (5) based on information contained on a subscriber identity module (8) without requiring root certificates stored on the SIM. In the invention the applications are instead linked to other domain identity information contained on the SIM card. In one mode, the application contains an identification directly linking it to information on the SIM. In another mode, hashes of roots (9) are stored in the phone, but a specific hash must be validated by matching it with information contained on the SIM (8).

## Description

### Field of the invention

The present invention relates to a method for associating an application with a subscriber identity module in an apparatus, especially a mobile phone terminal adapted to run applications within the framework of a virtual machine. The invention enables enabling or disabling of applications based on information contained on a subscriber identity module without requiring root certificates stored on the subscriber identity module.

The invention also relates to an apparatus implementing the method.

### State of the art

In electronic equipment, such as mobile telephones, it is often desired to enhance the functionality by adding applications. A known example is a MIDLet, which is the term of an application in the Java environment. Applications are enabled by letting them access the equipment through an interface, the control of which is dependent of e.g. the origin of the application. The origin is verified and validated by signatures and certificates linked to a root certificate in the equipment. The origin of the application may e.g. be the manufacturer or operator.

The user, i.e. the subscriber, is associated with an identification module, e.g. the SIM card of the GSM system. The SIM is issued by the operator of the mobile system to which the subscriber is subscribing. The operator wants to control that only his own applications are enabled in a phone with a SIM card belonging to this operator.

In MIDP (Mobile Information Device Profile) 2.0 this is solved by locating a root certificate in the SIM card. The mobile phone contains logic such that the applications are only enabled when a SIM card with the correct root certificate is inserted in the phone. A more detailed description of the prior art procedure may be found in the detailed description.

However, some operators have not implemented a support for handling of operator root certificates on the SIM card. To solve this, operators have required solutions where the operator root certificate is stored on a memory in the phone. This solution suffers from one major shortcoming. The problem is that is does not prevent MIDLets belonging to one operator from running in the operator domain belonging to another operator. In other words, once an operator MIDLet is installed on the phone, it will run regardless of what SIM is inserted. The change of SIM card does not alter the root certificates stored in the phone and used for enabling applications.

### Summary of the invention

The present invention solves this problem by instead linking the applications to other domain identity information contained only on the SIM card, such as the International Mobile Subscriber Identity, IMSI. In one mode, the application contains an identification directly linking it to information on the SIM. In another mode, hashes of roots are stored in the phone, but a specific hash must be validated by matching it with information contained on the SIM. A MIDLet is associated with a hash of root as in the prior art, but a MIDLet is only enabled if it matches a valid hash of root. The invention gives the operator control of which applications are enabled without having to implement support of root certificates on the SIM card.

In a first aspect, the invention provides a method for associating an application with a subscriber identity module in an apparatus having: a module reader for such a subscriber identity module, a virtual machine for running at least one application, wherein an interface between the application and the apparatus is dependent on a domain associated with the application and the application is permitted to be run only if it is enabled.

According to the invention, the method comprises the steps of:
linking the application with a value capable of being linked with a domain identity, DID, value of a type that is contained on such a subscriber identity module;
enabling or disabling the application by performing the steps of:
   reading a corresponding DID value from a subscriber identity module inserted in the apparatus;
   comparing the DID value of the application with the DID value of the subscriber identity module;
   if the DID values match, enabling the application in the associated domain, otherwise disabling the application.

In one embodiment, the method comprises the steps of:
linking the application with a hash of a root certificate;
storing in the apparatus one or several domain identity, DID, values of a type that is contained on such a subscriber identity module, and each such DID value being linked with a hash of a specific root certificate forming linked pairs of DID values and hash of root certificates;
enabling or disabling the application by performing the steps of:
   reading a corresponding DID value from a subscriber identity module inserted in the apparatus;
   comparing the DID values of the linked pairs of DID values and hash of root certificates with the DID value of the subscriber identity module;
   if the DID values match, declaring any matched pairs of DID values and hash of root certificates valid;
   comparing the hash of root certificate of the application with the hash of root certificate of any valid pairs of DID values and hash of root certificates;
   if the hash of root certificate of the application and the hash of root certificate of any of the valid pairs of DID values and hash of root certificates match, enabling the application in the associated domain, otherwise disabling the application.

Suitably, one or several linked pairs of DID values and hash of root certificates are stored in the apparatus during the manufacturing or customization of the apparatus.

Also, one or several pairs of empty DID values and hash of root certificates DID values may be stored in the apparatus, wherein the DID values are to be generated by a subscriber identity module.

The DID values may be locked to the ones generated by the first SIM card inserted into the phone.

Suitably, the DID value is contained in the International Mobile Subscriber Identity, IMSI.

The DID value may be any subset of the IMSI, such as the MNC or MCC numbers.

Alternatively, the DID value is contained in a field on the subscriber identity module, such as the GID1 or GID2 fields.

Also, the DID value may be contained in a combination of the IMSI and the GID1 or GID2 fields.

Suitably, the enabling or disabling of an application is performed after downloading a new application.

Suitably, the enabling or disabling of an application is performed after installing an external memory with an application in the apparatus.

Suitably, the enabling or disabling of an application is performed on power on of the apparatus.

The applications may be locked to the applications enabled by means of the subscriber identity module present in the apparatus at the first power on.

Suitably, the enabling or disabling of an application is performed after inserting a subscriber identity module into the apparatus.

In a second aspect, the invention provides an apparatus having: a module reader for a subscriber identity module, a virtual machine for running at least one application, an interface between the application and the apparatus dependent on a domain associated with the application and the application being permitted to be run only if it is enabled, the application being linked with a value capable of being linked with a domain identity, DID, value of a type that is contained on such a subscriber identity module; and a security manager for controlling the interface.

According to the invention, the security manager, for enabling or disabling the application, is adapted to perform the steps of:
reading a corresponding DID value from a subscriber identity module inserted in the apparatus;
comparing the DID value of the application and with the DID value of the subscriber identity module;
if the DID values match, enabling the application in the associated domain, otherwise disabling the application.

In one embodiment, the apparatus comprises a memory for storing one or several domain identity, DID, values of a type that is contained on such a subscriber identity module, each such DID value being linked with a hash of a specific root certificate forming linked pairs of DID values and hash of root certificates;
wherein the security manager, for enabling or disabling the application, is adapted to perform the steps of:
reading a corresponding DID value from a subscriber identity module inserted in the apparatus;
comparing the DID values of the linked pairs of DID values and hash of root certificates with the DID value of the subscriber identity module;
if the DID values match, declaring any matched pairs of DID values and hash of root certificates valid;
comparing the hash of root certificate of the application with the hash of root certificate of any valid pairs of DID values and hash of root certificates;
if the hash of root certificate of the application and the hash of root certificate of any of the valid pairs of DID values and hash of root certificates match, enabling the application in the associated domain, otherwise disabling the application.

Suitably, one or several linked pairs of DID values and hash of root certificates are stored in the apparatus.

Also, one or several pairs of empty DID values and hash of root certificates DID values may be stored in the apparatus, wherein the DID values are to be generated by a subscriber identity module.

The security manager may be adapted to lock the DID values to the ones generated by the first SIM card inserted into the phone.

Suitably, the DID value is of a type contained in the International Mobile Subscriber Identity, IMSI.

The DID value may be any subset of the IMSI, such as the MNC or MCC numbers.

Alternatively, the DID value is of a type contained in a field on the subscriber identity module, such as the GID1 or GID2 fields.

Also, the DID value may be contained in a combination of the IMSI and the GID1 or GID2 fields.

Suitably, the security manager is adapted to perform the enabling or disabling of an application after downloading a new application.

Suitably, the security manager is adapted to perform the enabling or disabling of an application after installing an external memory with an application in the apparatus.

Suitably, the security manager is adapted to perform the enabling or disabling of an application on power on of the apparatus.

The security manager may be adapted to lock the permissions of the applications to the applications enabled by means of the subscriber identity module present in the apparatus at the first power on.

Suitably, the security manager is adapted to perform the enabling or disabling of an application after inserting a subscriber identity module into the apparatus.

The apparatus may be a portable telephone, a pager, a communicator, a smart phone or an electronic organiser.

Suitably, the subscriber identity module is a SIM card.

### Brief description of the drawings

The invention will be described in detail below with reference to the accompanying drawings, in which:
Fig. 1 is a schematic diagram of entities and the procedure for verifying and validating a MIDLet downloaded in the mobile telephone over the air;
Fig. 2 is a schematic drawing of the security model and location of various root certificates in a mobile telephone;
Fig. 3 is a schematic drawing of entities and the procedure for enabling an application with the root stored on the SIM;
Fig. 4 is a schematic drawing of the entities and procedure according to a first embodiment of the present invention for enabling an application when the application is associated with a domain identifier stored on the SIM; and
Fig. 5 is a schematic drawing of entities and the procedure of another embodiment of the present invention for enabling an application when the application is linked with a root and domain identifier/root pairs are stored in a phone and in turn associated with a domain identifier on the SIM.

### Detailed description of preferred embodiments

The invention will be described with reference to a mobile telephone terminal operating in a telecommunications network, such as the GSM. In GSM the mobile phone is linked to a subscriber and a specific telephone number by means of the SIM card, which is an active (smart) card inserted in the telephone. The phone is provided with a reader for retrieving information from the SIM card and may also write information to the card, e.g. using it as a memory for storing phone number etc, as is known in the art. Applications may be downloaded to the phone and run on a special platform, a so called virtual machine, usually implemented as a Java environment. The invention does not exclude other kinds of third party applications, such as native code, and the phone may be an open phone based on Symbian OS, which implements a mechanism similar to the Java environment. The mobile terminal may be e.g. a portable telephone, a pager, a communicator, a smart phone or an electronic organiser.

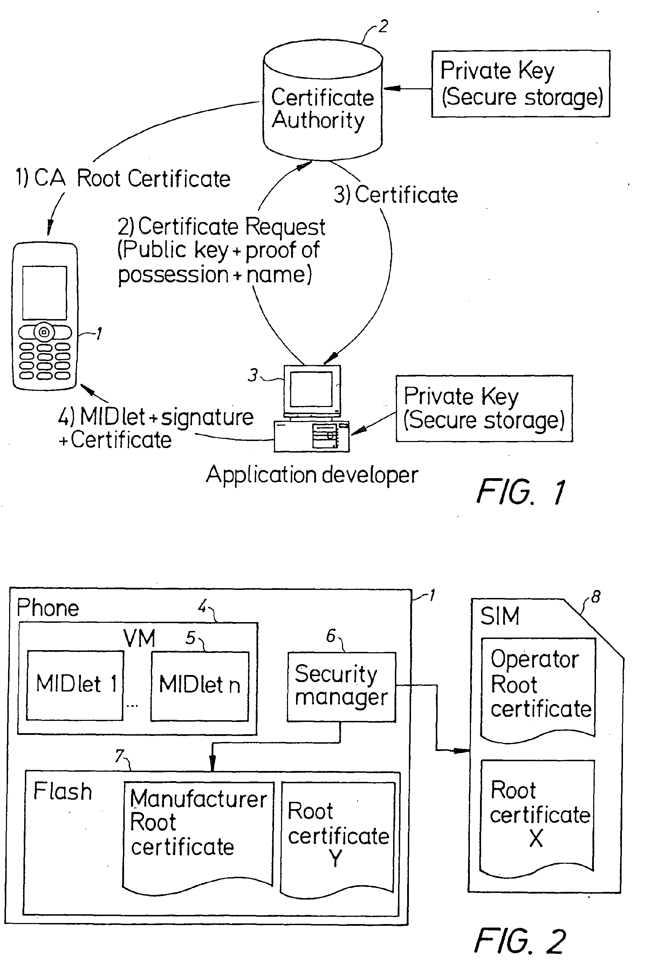

As background the security model according to the prior art, and partly utilised by the present invention, is described with reference to figs. 1 to 3. The MIDP 2.0 security framework defines a domain based security model. In that model a domain is a set of capabilities, i.e. a sandbox, and an associated root certificate. The sandbox may be regarded as a set of rules for accessing entities of the mobile phone through an interface from the application running in the virtual machine. To get access to the functionality in a sandbox a MIDLet, i.e. an application in a Java environment, must be signed by the application developer, as is shown in fig. 1.

The phone 1 contains a certificate chain in a jad (Java descriptor) file and a root certificate. The MIDLet contains a signature and is carrying information locking it to a specific domain, e.g. an operator domain.

In fig. 1 a root certificate is stored in the phone 1, in a memory or on the SIM card. As is known in the art, the MIDLet is provided with a signature and a certificate by an application developer 3 in cooperation with a certificate authority 2 using a secure system for exchange of certificates with private keys. The procedure for verification and validation of the MIDLet is conventional and does not form part of the present invention.

Fig. 2 illustrates a phone 1 and possible locations of root certificates. MIDLets (1...n) 5 are run in a virtual machine 4. A security manager 6 controls the access of the MIDLets through an interface (not shown). The security manager 6 needs information from the root certificates, of which some may be stored in a flash memory 7 and others may be stored in a SIM card 8. The SIM card is shown as separate from the phone 1 even though it is actually inserted in the phone when in use.

When a MIDLet 4 is installed or downloaded the signature is verified as follows:
1. The certificate chain is read from the jad file stored in the phone 1.
2. A root certificate is retrieved from the phone 1 or from the SIM 8.
3. The certificate chain is validated and linked to a specific root certificate.
4. The MIDLet is assigned to the domain defined by the root certificate.

As may be seen from fig. 2, the root certificate can reside either on the SIM 8 or in the phone 1.

As mentioned in the introduction, the MIDP 2.0 specification stipulates that the operator root certificate must reside on the SIM, and never in the phone. In order to prevent MIDLets belonging to one operator from running in the operator domain belonging to another operator, special measures are taken to ensure that the domain and its MIDLets are only enabled if a SIM with the associated root is inserted.

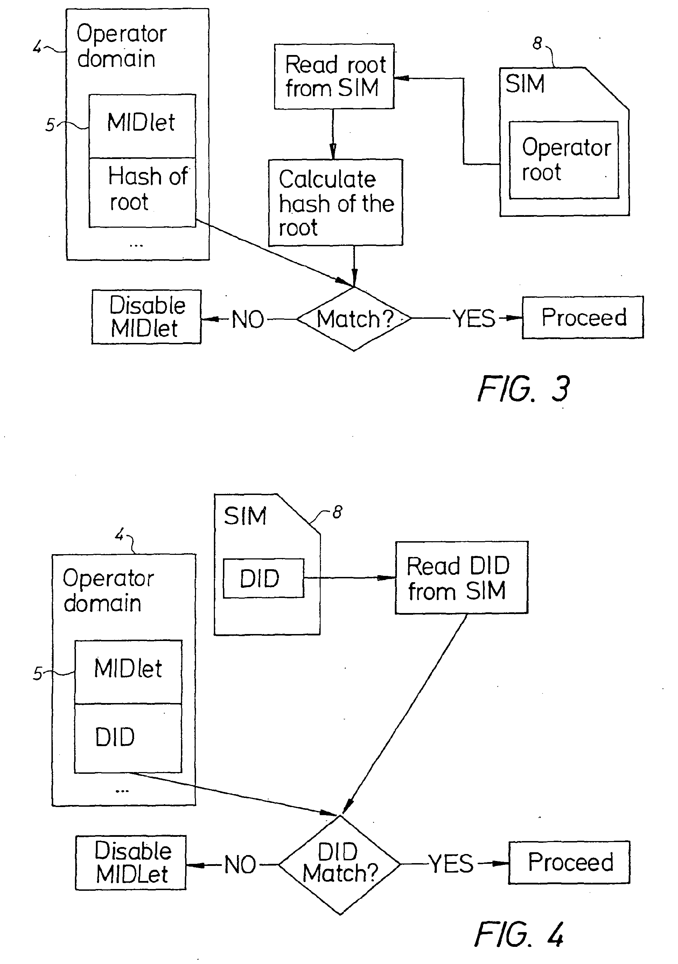

With reference to fig. 3, only showing a MIDLet 5 in the operator domain of the virtual machine 4 and the SIM 8, this has been done as follows in the prior art:
1. The operator root is read from the SIM 8.
2. The hash of the root is calculated.
3. The calculated hash is compared to the hash assigned to the MIDLets in the operator domain.
4. If the hash values match, the MIDLets are enabled, otherwise they are disabled.

It will be seen that if the operator root was stored in the phone, instead of on the SIM 8, the MIDLet 5 would be enabled even if the SIM 8 was changed. The object of the present invention is to introduce a similar prevention mechanism as described where we stop MIDLets belonging to one operator from running in the operator domain belonging to another operator, however without requiring the root to be stored on the SIM card.

Since there are no roots available on the SIM, the mechanism will have to be modified. In a first embodiment of the invention, the MIDLet is linked with other information contained on the SIM, generally a domain identifier, DID, value. Examples of possible DID values are set forth below in connection with the second embodiment. In the first embodiment, the MIDLet has to be provided with a corresponding DID value by the developer or another provider of the application.

With reference to fig. 4, the procedure is performed as follows. This is done on downloading of the application, on installing the application, on power-on of the phone and/or on inserting the SIM.
1. The DID is read from the SIM 8.
2. The DID of the SIM is compared with the DID of the MIDLet 5.
3. If the two DID values match, the MIDLet is enabled and may proceed to be used in the associated domain, otherwise the MIDLet is disabled.

As noted above, in the first embodiment of the invention the MIDLet 5 has to be linked with a DID value, which requires the provider to modify the MIDLet.

In a second embodiment of the invention, the MIDLet is linked to the hash of the root, as in the prior art. In addition, the hash value of the root is bound to something contained on the SIM card, i.e. not a root certificate but something else related to e.g. the operator. This information contained on the SIM is used for validation of possible candidates for hash values of root certificates. During the manufacturing or customization of the phone, various hash values are stored in the phone, e.g. in a flash memory, and linked with specific information contained on SIM cards, so to speak candidate DID values. When a SIM card is inserted in the phone, these pairs of hash values and candidate DID values may be validated by comparing with DID values contained on the SIM. Thus, it is possible to define several allowed DID numbers/hash of root pairs. The allowed DID values should be a part of the customization information together with the operator root certificate. The mechanisms described here should be combined with a reasonably secure customization scheme to ensure the integrity of the operator root and associated DID value.

In an alternative, hash values are stored in the phone, but they are not linked with specific information contained on SIM cards during the manufacturing or customization. Instead, this information is "empty" and adapted to be retrieved from a SIM card, suitably the first SIM card inserted into the phone. Thus, the candidate DID values are generated by the SIM card. Preferably, the candidate DID values are locked to the ones generated by the first SIM card inserted into the phone, but DID values from further SIM cards may be accepted.

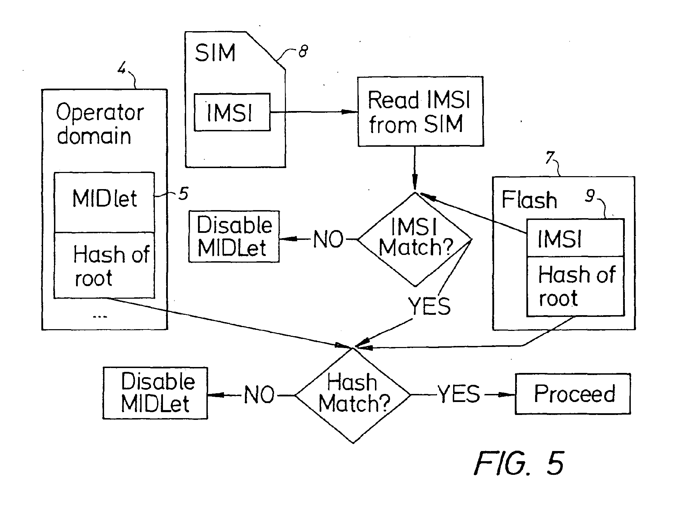

The enabling procedure is described with reference to fig. 5. In this example the DID value is contained in the IMSI number. The procedure is performed on various occasions as discussed below.
1. The IMSI is read from the SIM 8.
2. The IMSI is compared to the IMSI information of the pairs 9 of IMSI information values and hashes of roots stored in the flash memory 7.
3. If the IMSI information values match, the hash of root of this pair 9 is considered valid and the hash of root can be used.
4. The valid hash of root of the pair 9 is compared to the hash of the root assigned to the MIDLet 5 in the associated domain in the virtual machine 4.
5. If the hash values match, the MIDLet is enabled and may proceed to be used, otherwise it is disabled.

The IMSI (International Mobile Subscriber Identity) is unique for each subscriber and contains fifteen figures in various fields. It is possible to lock the MIDLets to subsets of the IMSI, such as the MNC (Mobile Network Code), and MCC (Mobile Country Code) numbers. The MNC and MCC numbers are fields forming parts of the IMSI. It is also possible to bind the MIDLet to other information contained on the SIM, such as the (Group Identifier Level) GID1 and GID 2 fields. Today, these fields are free to use for the operator and are e.g. used for SIMlock, operator binding, defining various types of subscriptions, etc. It is also possible to use combinations of the IMSI fields and the GID fields. The syntax describing the numbers may include various characters, such as *, ? as well as the ten digits 0...9.

By incorporating this information in the hash of root/DID value pairs, it is possible to achieve a very fine grained distribution of permissions for the applications.

The procedure of enabling an application described above may be performed at any time. It is suitable that it is performed after downloading a new application, which may be over the air or by inserting an external memory containing the application. The enabling procedure may also be performed thereafter on installing the application. A new enabling procedure should also be performed on changing the SIM, i.e. as soon as a subscriber identity module is inserted into the apparatus (whether it is the same SIM as before or another one). This may and should result in that some applications are no longer enabled.

Also, the enabling procedure is performed on start-up of the phone, i.e. on power-on. The invention gives a possibility to lock the enabled applications similar to the SIMlock feature autolock, i.e. the enablement of applications in e.g. the operator domain is bound to the enablement performed by means of the SIM present at the first power-on of the phone.

It will be seen that the invention prevents applications belonging to one operator from running in the operator domain belonging to another operator, even if the root is stored in the handset, i.e. the phone or any other media apart from the SIM connected to the phone.

The invention may be implemented by various combinations of hardware and software, as will be appreciated by a person skilled in the art. The scope of the inventions is only limited by the claims below.

## Claims

1. A method for associating an application (5) with a subscriber identity module (8) in an apparatus (1) having: a module reader for such a subscriber identity module (8), a virtual machine (4) for running at least one application, wherein an interface between the application (5) and the apparatus (1) is dependent on a domain associated with the application (5) and the application (5) is permitted to be run only if it is enabled, the method comprising the steps of:
linking the application (5) with a value capable of being linked with a domain identity, DID, value of a type that is contained on such a subscriber identity module (8);
enabling or disabling the application (5) by performing the steps of:
reading a corresponding DID value from a subscriber identity module (8) inserted in the apparatus (1);
comparing the DID value of the application (5) and with the DID value of the subscriber identity module (8);
if the DID values match, enabling the application (5) in the associated domain, otherwise disabling the application (5).

2. A method for associating an application (5) with a subscriber identity module (8) in an apparatus (1) having: a module reader for such a subscriber identity module (8), a virtual machine (4) for running at least one application (5), wherein an interface between the application (5) and the apparatus is dependent on a domain associated with the application (5) and the application (5) is permitted to be run only if it is enabled, the method comprising the steps of:
linking the application (5) with a hash of a root certificate;
storing in the apparatus (1) one or several domain identity, DID, values of a type that is contained on such a subscriber identity module (8), and each such DID value being linked with a hash of a specific root certificate forming linked pairs (9) of DID values and hash of root certificates; enabling or disabling the application (5) by performing the steps of:
reading a corresponding DID value from a subscriber identity module (8) inserted in the apparatus (1);
comparing the DID values of the linked pairs (9) of DID values and hash of root certificates with the DID value of the subscriber identity module (8);
if the DID values match, declaring any matched pairs (9) of DID values and hash of root certificates valid;
comparing the hash of root certificate of the application (5) with the hash of root certificate of any valid pairs (9) of DID values and hash of root certificates;
if the hash of root certificate of the application (5) and the hash of root certificate of any of the valid pairs (9) of DID values and hash of root certificates match, enabling the application (5) in the associated domain, otherwise disabling the application (5).

3. A method according to claim 2, **characterised in that** one or several linked pairs (9) of DID values and hash of root certificates are stored in the apparatus (1) during the manufacturing or customization of the apparatus.

4. A method according to claim 2 or 3, **characterised in that** one or several pairs (9) of empty DID values and hash of root certificates DID values are stored in the apparatus (1), wherein the DID values are to be generated by a subscriber identity module (8).

5. A method according to claim 4, **characterised in that** the DID values are locked to the ones generated by the first SIM card inserted into the phone.

6. A method according to any one of the preceding claims, **characterised in that** the DID value is contained in the International Mobile Subscriber Identity, IMSI.

7. A method according to claim 6, **characterised in that** the DID value is any subset of the IMSI, such as the MNC or MCC numbers.

8. A method according to any one of claims 1 to 5, **characterised in that** the DID value is contained in a field on the subscriber identity module, such as the GID1 or GID2 fields.

9. A method according to any one of claims 1 to 5, **characterised in that** the DID value is contained in a combination of the IMSI and the GID1 or GID2 fields.

10. A method according to any one of claims 1 to 9, **characterised in that** the enabling or disabling of an application (5) is performed after downloading a new application (5).

11. A method according to any one of claims 1 to 10, **characterised in that** the enabling or disabling of an application (5) is performed after installing an external memory with an application (5) in the apparatus (1).

12. A method according to any one of claims 1 to 11, **characterised in that** the enabling or disabling of an application (5) is performed on power on of the apparatus (1).

13. A method according to claim 12, **characterised in that** the permissions of the applications (5) are locked to the applications (5) enabled by means of the subscriber identity module (8) present in the apparatus (1) at the first power on.

14. A method according to any one of claims 1 to 13, **characterised in that** the enabling or disabling of an application (5) is performed after inserting a subscriber identity module (8) into the apparatus (1).

15. An apparatus (1) having: a module reader for a subscriber identity module (8), a virtual machine (4) for running at least one application (5), an interface between the application (5) and the apparatus dependent on a domain associated with the application (5) and the application (5) being permitted to be run only if it is enabled, the application (5) being linked with a value capable of being linked with a domain identity, DID, value of a type that is contained on such a subscriber identity module (8); and a security manager (7) for controlling the interface, **characterised in that**:
the security manager (7), for enabling or disabling the application (5), is adapted to perform the steps of:
reading a corresponding DID value from a subscriber identity module (8) inserted in the apparatus (1);
comparing the DID value of the application (5) and with the DID value of the subscriber identity module (8);
if the DID values match, enabling the application (5) in the associated domain, otherwise disabling the application (5).

16. An apparatus (1) having: a module reader for a subscriber identity module (8), a virtual machine (6) for running at least one application (5), an interface between the application (5) and the apparatus dependent on a domain associated with the application (5) and the application (5) being permitted to be run only if it is enabled, the application (5) being linked with a hash of a root certificate; and a security manager (6) for controlling the interface, **characterised in that**:
the apparatus (1) comprises a memory (7) for storing one or several domain identity, DID, values of a type that is contained on such a subscriber identity module (8), each such DID value being linked with a hash of a specific root certificate forming linked pairs (9) of DID values and hash of root certificates;
the security manager (6), for enabling or disabling the application (5), is adapted to perform the steps of:
reading a corresponding DID value from a subscriber identity module (8) inserted in the apparatus (1);
comparing the DID values of the linked pairs (9) of DID values and hash of root certificates with the DID value of the subscriber identity module (8);
if the DID values match, declaring any matched pairs (9) of DID values and hash of root certificates valid;
comparing the hash of root certificate of the application (5) with the hash of root certificate of any valid pairs (9) of DID values and hash of root certificates;
if the hash of root certificate of the application (5) and the hash of root certificate of any of the valid pairs (9) of DID values and hash of root certificates match, enabling the application (5) in the associated domain, otherwise disabling the application (5).

17. An apparatus according to claim 16, **characterised in that** one or several linked pairs (9) of DID values and hash of root certificates are stored in the apparatus (1).

18. An apparatus according to claim 16 or 17, **characterised in that** one or several pairs (9) of empty DID values and hash of root certificates are stored in the apparatus (1), wherein the DID values are to be generated by a subscriber identity module (8).

19. An apparatus according to claim 18, **characterised in that** the security manager (6) is adapted to lock the DID values to the ones generated by the first SIM card inserted into the phone.

20. An apparatus according to any one of claims 15 to 19, **characterised in that** the DID value is of a type contained in the International Mobile Subscriber Identity, IMSI.

21. An apparatus according to claim 20, **characterised in that** the DID value is any subset of the IMSI, such as the MNC or MCC numbers.

22. An apparatus according to any one of claims 15 to 19, **characterised in that** the DID value is of a type contained in a field on the subscriber identity module (8), such as the GID1 or GID2 fields.

23. An apparatus according to any one of claims 15 to 19, **characterised in that** the DID value is contained in a combination of the IMSI and the GID1 or GID2 fields.

24. An apparatus according to any one of claims 15 to 23, **characterised in that** the security manager (6) is adapted to perform the enabling or disabling of an application (5) after downloading a new application (5).

25. An apparatus according to any one of claims 15 to 24, **characterised in that** the security manager (6) is adapted to perform the enabling or disabling of an application (5) after installing an external memory with an application (5) in the apparatus (1).

26. An apparatus according to any one of claims 15 to 25, **characterised in that** the security manager (6) is adapted to perform the enabling or disabling of an application (5) on power on of the apparatus (1).

27. An apparatus according to claim 26, **characterised in that** the security manager (6) is adapted to lock the permissions of the applications (5) to the applications enabled by means of the subscriber identity module (8) present in the apparatus (1) at the first power on.

28. An apparatus according to any one of claims 15 to 27, **characterised in that** the security manager (6) is adapted to perform the enabling or disabling of an application (5) after inserting a subscriber identity module (8) into the apparatus (1).

29. An apparatus according to any one of claims 15 to 29, **characterised in that** the apparatus (1) is a portable telephone, a pager, a communicator, a smart phone or an electronic organiser.

30. An apparatus according to claim 29, **characterised in that** the subscriber identity module (8) is a SIM card.
